(19) **Europäisches Patentamt**

**European Patent Office**

**Office européen des brevets**

(11) **EP 0 736 259 B1**

(12) **FASCICULE DE BREVET EUROPEEN**

(45) Date de publication et mention
de la délivrance du brevet:
**20.03.2002 Bulletin 2002/12**

(51) Int Cl.⁷: **A23J 3/16**, A23J 3/22

(21) Numéro de dépôt: **96200590.6**

(22) Date de dépôt: **05.03.1996**

(54) **Fabrication de protéines texturées**

Herstellung von texturierten Proteinen

Manufacturing textured proteins

(84) Etats contractants désignés:
**AT BE CH DE DK ES FR GB GR IE IT LI LU NL PT
SE**
Etats d'extension désignés:
**LT LV SI**

(30) Priorité: **06.04.1995 CH 98495**

(43) Date de publication de la demande:
**09.10.1996 Bulletin 1996/41**

(73) Titulaire: **SOCIETE DES PRODUITS NESTLE S.A.
1800 Vevey (CH)**

(72) Inventeur: **Ammann, Nico
CH-1807 Blonay (CH)**

(74) Mandataire: **Wavre, Claude-Alain et al
55, avenue Nestlé
1800 Vevey (CH)**

(56) Documents cités:
**EP-A- 0 265 740       EP-A- 0 385 266
EP-A- 0 422 750       EP-A- 0 479 596
EP-A- 0 620 980       FR-A- 2 120 914
FR-A- 2 282 810**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

**Description**

La présente invention a pour objet un procédé de fabrication de protéines texturées, ainsi qu'un appareil pour la mise en oeuvre de ce procédé.

On connaît divers procédés de fabrication de protéines texturées. Parmi les types connus de protéines texturées, on peut citer en particulier les protéines filées et les protéines texturées par cuisson extrusion.

US 4943441 décrit un autre type de procédé de fabrication de protéines texturées, dans lequel la matière végétale de départ subit, lors d'une première étape, une hydratation et une acidification, de manière que sa teneur en eau soit de 45 % à 65 % et que son pH soit compris entre 4,5 et 6,5. Puis on pompe la matière végétale qui se présente sous forme d'une pâte homogène ou sous forme liquide suivant sa viscosité, dans une zone confinée dans laquelle on la soumet à un traitement à la vapeur sous pression à chaud. Après cette seconde étape, les morceaux de protéines texturées de forme irrégulière sont directement utilisables, comme substituts alimentaires, ou peuvent également être séchés et réhydratés ultérieurement.

EP 0620 980 décrit un procédé dans lequel les protéines sont texturées par chauffage sous pression centrifuge dans un tube. Un boudin se forme ainsi dans ce tube. Le boudin est ensuite retenu dans le tube de manière à ce qu'une couche extérieure ferme se forme pour retenir la texture et la forme du boudin. Le boudin ainsi obtenu est un pièce cylindrique formé de multicouches coagulées.

EP 0385 266 décrit un procédé de fabrication de substitut de viande sous forme de morceaux irréguliers de protéines de soja texturés. Le procédé consiste à chauffer à l'aide de vapeur un mélange visqueux acidifié de graines de soja broyées. Les morceaux coagulés textures irréguliers obtenus sont déchargés de la zone de cuisson et peuvent être séchés. Les produits obtenus se présentent sous la forme de gros morceaux irréguliers.

La présente invention a pour but de proposer un procédé de fabrication de protéines texturées permettant d'obtenir des morceaux distincts de protéines texturées de forme régulière et définie, ainsi qu'un appareil pour la mise en oeuvre de ce procédé.

A cet effet, dans le procédé de fabrication de protéines texturées selon la présente invention, on disperse dans de l'eau à 10-30° une farine, une semoule et/ou des flocons de soya présentant une granulométrie de 40-400 μm et un agent acidifiant, de manière à obtenir un mélange présentant une teneur en matière sèche de 33-40 %, un pH de 4,8-5,7 et une viscosité de 5000-12000 mPas, on soumet le mélange à un traitement par injection de vapeur durant 5-60 s à 120-150° C de manière à former des morceaux de protéines texturées, caractérisé en ce qu'on éjecte les morceaux par une buse d'éjection, sous forme d'un faisceau de morceaux distincts, on agglomère les morceaux éjectés par impact sur une surface déflectrice interceptant ledit faisceau de manière à former un boudin de morceaux agglomérés, on met en forme et/ou l'on découpe le boudin en fragments et l'on sèche les fragments.

De préférence, on disperse dans de l'eau à 10-30° C une farine, une semoule et/ou des flocons de soya et un agent acidifiant, de manière à obtenir un mélange présentant un pH de 5,0-5,4.

De même, l'appareil pour la mise en oeuvre du procédé selon la présente invention comprend un dispositif de traitement par injection de vapeur, un dispositif d'éjection, un dispositif de déflection et un dispositif de formage et/ou de découpage.

On peut injecter du gaz non condensable dans le mélange avant le traitement par injection de vapeur, par exemple.

On peut utiliser de l'azote, de l'air ou du dioxide de carbone par exemple.

De préférence, lors de cette étape de foisonnement, on utilise 100-400 l/h d'azote liquide à 0,5-5 bar pour 100-450 kg/h de mélange, de manière à aérer le mélange et à le protéger de l'oxydation. Si le produit est trop aéré, il sera trop friable.

On peut injecter du gaz non condensable dans le mélange avant le traitement par injection de vapeur, de manière à obtenir des fragments consommables sans étape de réhydratation par cuisson dans de l'eau bouillante, par exemple.

De préférence, on effectue le traitement par injection de vapeur dans un tube en "T" muni à chacune de ses extrémités d'au moins un diaphragme permettant respectivement la régulation de l'arrivée de vapeur, de l'arrivée du mélange et de la sortie du mélange dans lequel la vapeur a été injectée.

Dans le tube en "T", la pression de la vapeur, dans le tube d'arrivée de vapeur, peut être de 6-8 bar, celle du mélange, dans le tube d'arrivée du mélange, peut être de 6-8,5 bar et celle du mélange dans lequel la vapeur a été injectée peut être de 3-5 bar, par exemple.

De préférence, le tube en "T" est suivi d'un tube d'attente dont la longueur est de 600-1700 mm et le diamètre est de 2-3 cm. Le tube d'attente peut être muni d'un ou de plusieurs diaphragmes, par exemple.

Au cours du traitement par injection de vapeur à 145° C, la structure tridimentionnelle des protéines change en une structure ferme de protéines texturées. De plus le traitement à température élevée permet d'assurer un travail en conditions stériles et la réduction d'au moins 2/3 de l'activité de l'inhibiteur de la trypsine présent dans le soya.

De préférence, on contrôle le traitement par injection de vapeur par une soupape de contre-pression, de manière à obtenir des conditions stables de température et de pression. On peut utiliser la soupape de contre-pression décrite dans le brevet EP-A- 87108238.4, par exemple.

Le corps cylindrique de cette dernière est constitué dans sa partie supérieure d'une chambre en communication avec une arrivée d'air comprimé et dans sa partie inférieure d'une chambre de passage du mélange ayant un orifice d'entrée et de sortie pour le mélange. Ces deux chambres sont séparées par une membrane traversée en son centre par une cheville qui peut coulisser de haut en en bas dans le corps cylindrique de la soupape. En position haute, la soupape est ouverte et libère une certaine quantité de mélange de la chambre de passage du mélange vers la chambre de détente située au-delà de la soupape. A l'inverse, en position basse, la soupape est fermée. Le coulissement de la cheville est régulé d'une part par la pression de l'air comprimé sur la surface supérieure de la membrane et d'autre part par la pression du mélange amené dans la chambre de passage du mélange.

Le dispositif d'éjection comprend une buse d'éjection pouvant être inclinée vers le bas, de manière à orienter la trajectoire d'éjection du faisceau de morceaux distincts sur la bande de transport, par exemple.

De préférence, la buse d'éjection forme un angle de 115-125° avec la portion de surface déflectrice interceptant le faisceau de morceaux distincts.

La surface déflectrice peut être perpendiculaire à la bande de transport, de manière à agglomérer le faisceau de morceaux distincts, par exemple.

Elle peut être constituée de trois portions de surface, disposées de manière que celle du milieu forme un angle de 25-35° avec les deux autres, par exemple.

La buse d'éjection peut donc être inclinée vers le bas et peut diriger le faisceau de morceaux distincts dans l'angle formé par la portion du milieu de la surface déflectrice avec la bande de transport, par exemple.

Le boudin de morceaux agglomérés formé peut être véhiculé sur la bande de transport le long de la surface déflectrice, par exemple.

Celle-ci présente, de préférence, des surfaces lisses, notamment pour éviter que l'on ait des morceaux qui y adhèrent.

De préférence, on forme et/ou on découpe le boudin de morceaux agglomérés à l'état chaud.

De préférence, le dispositif d'éjection est muni d'un système de ventilation, de manière à éviter une condensation de vapeur sur le dispositif de formage et/ou de découpage.

On peut mettre en forme le boudin de morceaux agglomérés en le comprimant entre un rouleau et la bande de transport, de manière à obtenir une pâte amincie, par exemple.

Le rouleau peut avoir une vitesse radiale de 0,1 à 0,5 m/s, par exemple. La bande de transport peut également avoir une vitesse de 0,1 à 0,5 m/s. La vitesse du rouleau et celle de la bande de transport peuvent être ajustées à la même vitesse lors du formage du boudin de morceaux agglomérés, par exemple.

De préférence, le rouleau a un sens de rotation identique à celui du déplacement de la bande de transport.

On peut découper le boudin de morceaux agglomérés notamment à l'aide d'un rouleau présentant des rayons parallèles et transversaux, de manière à obtenir des petits morceaux de proteines texturées de forme régulière et définie, par exemple.

On peut positionner le rouleau présentant des rayons parallèles et transversaux à l'extrémité de la bande de transport, par exemple.

On peut disposer dans le prolongement de l'extrémité de la bande de transport une plaque, de 2-5 cm de largeur et de même longueur que la largeur de la bande de transport, pour présenter le boudin de morceaux agglomérés, de manière qu'il puisse être découpé à angle droit par le dispositif de découpage, par exemple.

Le rouleau présentant des rayons parallèles et transversaux: peut avoir une vitesse radiale de 0,1 à 0,5 m/s, par exemple. La vitesse dudit rouleau et celle de la bande de transport peuvent être ajustées à la même vitesse, par exemple.

Le rouleau présentant des rayons parallèles et transversaux peut avoir un sens de rotation inverse à celui du déplacement de la bande de transport, par exemple.

On peut aussi découper le boudin de morceaux agglomérés à l'aide d'une lame disposée perpendiculairement au dessus de la bande de transport et ayant un mouvement de haut en bas, par exemple.

De préférence la vitesse de déplacement de la lame est supérieure à celle de la bande de transport, de manière à obtenir des morceaux distincts de protéines texturées de forme régulière et définie. La lame peut avoir un mouvement de haut en bas de 0,1 à 1 m/s, par exemple.

On peut additionner du sel et/ou un arôme et/ou un colorant au produit de départ dispersé dans de l'eau à 10-30° C, par exemple. On peut additionner du sel, de manière à obtenir des protéines texturées plus solubles, par exemple.

L'appareil pour la mise en oeuvre du procédé de fabrication de protéines texturées selon la présente invention est décrit plus en détails ci-après en référence au dessin annexé dans lequel:

- la figure 1 est une vue schématique d'ensemble d'une forme d'exécution de l'appareil.
- la figure 2 est une coupe longitudinale du dispositif de traitement par injection de vapeur de l'appareil représenté à la figure 1.

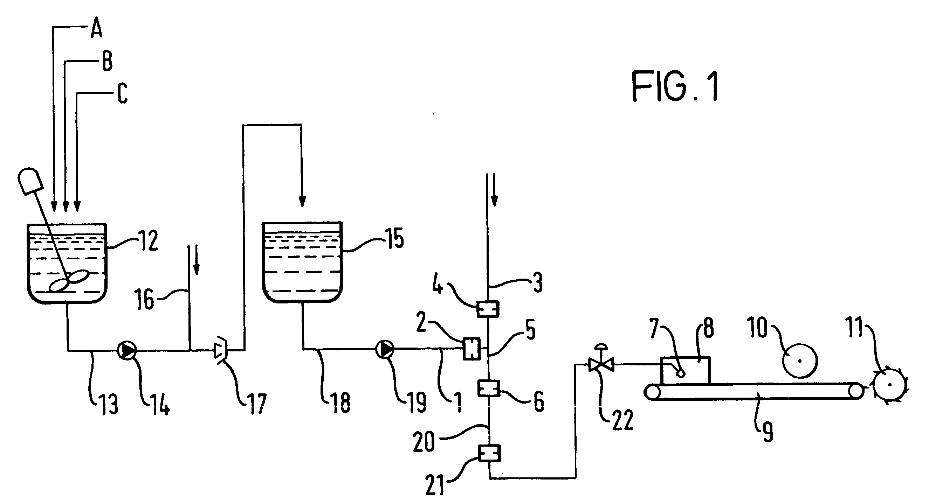

Comme on le voit sur la figure 1, l'appareil comprend un dispositif de traitement par injection de vapeur constitué d'un tube en "T" muni de diaphragmes à chacune de ses extrémités. L'arrivée du mélange (1) du tube en "T" est munie d'un diaphragme (2). L'arrivée de vapeur (3) du tube en "T" est munie d'un diaphragme (4). La sortie du mélange (5) du tube en "T" est munie d'un diaphragme (6).

Ledit appareil est constitué d'un dispositif d'éjection comprenant une buse d'éjection (7).

L'appareil selon la présente invention comprend un dispositif de déflection constitué par une surface déflectrice (8) disposée juste au-dessus de la bande de transport (9).

Au niveau de la bande de transport (9), l'appareil, selon la présente invention, est constitué d'un dispositif de formage et/ou de découpage comprenant un rouleau (10) et/ou un rouleau muni de rayons parallèles et transversaux (11).

Comme on le voit sur la figure 1, le dispositif de traitement à la vapeur est précédé d'un réservoir muni d'un mélangeur (12), dans lequel on disperse le soya (A) et l'agent acidifiant (B) dans de l'eau (C). Le tube de transfert (13), reliant le réservoir muni d'un mélangeur (12) et le réservoir tampon (15), est muni d'une pompe (14) et peut être muni d'un dispositif d'injection de gaz non condensable (16) dans le mélange et d'un moulin colloidal (17).

Le réservoir tampon (15) est relié au dispositif de traitement à la vapeur par un tube (18) muni d'une pompe (19).

Un tube d'attente (20) muni d'un diaphragme (21) et de la soupape de contre pression (22) relie la sortie du mélange (5) du tube en "T" au dispositif d'éjection comprenant une buse d'éjection (7).

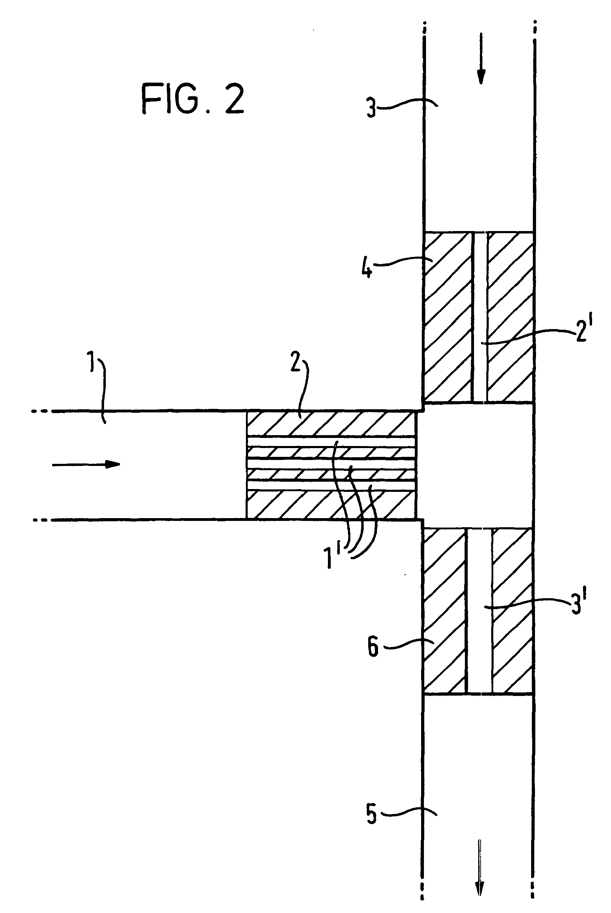

Selon la figure 2, le dispositif de traitement par injection de vapeur comprend un tube en "T" muni à chacune de ses extrémités d'au moins un diaphragme.

Le diaphragme (2) de l'arrivée du mélange (1) comprend trois conduits cylindriques (1').

Le diaphragme (4) de l'arrivée de vapeur (3) comprend un conduit cylindrique (2').

Le diaphragme (6) de la sortie du mélange (5) comprend un conduit cylindrique (3').

Le procédé de fabrication de protéines texturées selon la présente invention est décrit plus en détails dans les exemples non limitatifs ci-après où les parties et pourcentages sont pondéraux, sauf indication contraire.

**Exemple 1**

A l'aide de la forme d'exécution de l'appareil tel que représenté au dessin, on fabrique des morceaux distincts de protéines texturées de forme régulière et définie.

On disperse dans le réservoir muni d'un mélangeur 240 kg de farine de soya, ayant une teneur en eau de 10 %, dans 440l d'eau à 20° C, de manière à obtenir un mélange homogène. Avant ou pendant l'étape de mixage, on ajoute au mélange 2,5 kg de sel de cuisine et 8 kg d'acide chlorydrique à 18 %. La valeur du pH du mélange s'abaisse ainsi à une valeur de 5,2 et la teneur en matière sèche du mélange est de 34 %.

On pompe ledit mélange dans le tube de transfert jusque dans le réservoir tampon. Pendant que ce premier mélange se trouve dans le réservoir tampon, on prépare un second mélange dans le réservoir muni d'un mélangeur de la manière décrite ci-dessus. On assure ainsi une fabrication de protéines texturées en continu.

Le premier mélange, en attente dans le réservoir tampon, est pompé hors de ce dernier à un débit de 360 kg/h, jusqu'au dispositif de traitement par injection de vapeur.

Le dispositif de traitement par injection de vapeur comprend donc un tube en "T" muni à chacune de ses extrémités d'un diaphragme. Le diaphragme de l'arrivée du mélange comprend trois conduits cylindriques de 2,5 mm de diamètre et de 40 mm de long. Le diaphragme de l'arrivée de vapeur comprend un conduit cylindrique de 4,5 mm de diamètre et de 40 mm de long. Le diaphragme de sortie du mélange comprend un conduit cylindrique de 4,5 mm de diamètre et de 40 mm de long. Lors de cette étape, on injecte 60 kg/h de vapeur saturée à une pression de 8 bar dans le mélange. Dans le dispositif de traitement à la vapeur, la pression à l'arrivée du mélange est de 8,5 bar et la pression à la sortie du mélange est de 4 bar.

De manière à assurer une température constante de 145° C, la soupape de contre-pression du tube d'attente est réglée à 3,1 bar. Le tube d'attente est également muni d'un diaphragme comprenant un conduit cylindrique de 6 mm de diamètre et de 40 mm de long. La pression du mélange dans ledit tube est de 4,4 bar.

A l'extrémité du tube d'attente, le dispositif d'éjection constitué par la buse d'éjection dirige le faisceau de morceaux distincts contre la surface déflectrice perpendiculaire à la bande de transport. Ledit faisceau se trouve projeté sur la portion du milieu de la surface déflectrice qui forme un angle de 30° avec les deux autres portions de la surface déflectrice. La distance entre la buse d'éjection et la surface déflectrice est de 2 cm.

Au cours de son déplacement le long de la surface déflectrice sur la bande de transport, ledit faisceau forme un boudin de morceaux agglomérés.

Ledit boudin a une teneur en matière sèche de 34 %.

Il est véhiculé le long de la bande de transport jusqu'à son extrémité au niveau du dispositif de découpage constitué par un rouleau présentant des rayons parallèles et transversaux. A l'aide dudit dispositif, on découpe ledit boudin en morceaux distincts de protéines texturées de forme régulière et définie de 1,5 cm de long.

On sèche lesdit morceaux de protéines texturées de forme régulière et définie en les soumettant à un flux d'air chaud à 105° C pendant 2 h, puis à un flux d'air chaud à 95° C pendant 2,5 h, de manière à abaisser leur teneur en eau à 2,5 %.

On peut conserver les morceaux de protéines texturées en l'état pendant 12 mois à température ambiante.

On peut les réhydrater en les plongeant dans de l'eau bouillante pendant 15 min, de manière à obtenir des substituts alimentaires consommables instantanément ayant une texture agréable. Après réhydratation, les morceaux de protéines texturées ont une texture proche de celle de la viande cuite et un taux de réhydratation de 80 à 120 %, suivant la taille des morceaux. Les morceaux, dont le diamètre est supérieur à 2,5 cm, ont un taux de réhydratation de 80 % et ceux, dont le diamètre est inférieur à 1 cm, ont un taux de réhydratation de 120 %.

Le taux de réhydratation est défini comme étant le rapport:

$$\frac{\text{poids d'eau absorbée par les morceaux séchés}}{\text{poids des morceaux séchés}} \times 100\ \%$$

## Exemple 2

On procède de la manière décrite à l'exemple 1, à l'exception du fait qu'en fin de procédé on forme et on découpe le boudin de morceaux agglomérés à l'aide d'un autre système de formage et de découpage, de manière à obtenir des morceaux distincts de protéines texturées de forme régulière et définie.

Après l'agglomération, on obtient un boudin de morceaux agglomérés de texture élastique que l'on peut former et découper facilement.

On met le boudin de morceaux agglomérés, véhiculé sur la bande de transport, en forme en le comprimant entre un rouleau et la bande de transport. La vitesse de déplacement de la bande de transport ainsi que celle du rouleau sont ajustées à 0,3 m/s. La distance entre le rouleau et la bande de transport peut être ajustée entre 0,2 et 2 cm. On l'ajuste à 1 cm, de manière à comprimer ledit boudin et à obtenir une pâte amincie de protéines texturées de 1 cm d'épaisseur et de 6 cm de large.

Puis on découpe ladite pâte en bandes de 1 cm d'épaisseur, 6 cm de long et 3 cm de large, à l'aide d'une lame disposée perpndiculairement au dessus de la bande de transport et ayant un mouvement de haut en bas de 0,6 m/s.

On sèche lesdits morceaux de protéines texturées en les soumettant à un flux d'air chaud à 105° C pendant 2 h, puis à un flux d'air chaud à 95° C pendant 2,5 h, de manière à abaisser leur teneur en eau à 2,5 %.

## Exemple 3

A l'aide de la forme d'exécution de l'appareil tel que représenté au dessin, on fabrique des morceaux distincts de protéines texturées de forme régulière et définie.

On disperse dans le réservoir muni d'un mélangeur 240 kg de farine de soya, ayant une teneur en eau de 10 %, dans 440 d'eau à 20° C, de manière à obtenir un mélange homogène. Avant ou pendant l'étape de mixage, on ajoute au mélange 2,5 kg de sel de cuisine et 8 kg d'acide chlorydrique à 18 %. La valeur du pH du mélange s'abaisse ainsi à une valeur de 5,2 et la teneur en matière sèche du mélange est de 34 %.

On pompe ledit mélange dans le tube de transfert dans lequel on lui injecte du gaz non condensable.

Lors de cette étape de foisonnement, on utilise de l'azote.

Le tube d'injection de gaz est un tube coudé, de 3 mm de diamètre, introduit dans le tube de transfert. Le dispositif d'injection de gaz non condensable est muni d'une valve de régulation, de manière à contrôler les conditions d'injection de gaz dans le mélange en fonction de la densité du mélange.

On injecte 250 l/h d'azote à une pression de 1,5 bar dans le mélange dont le débit est de 400 kg/h.

Puis on procède de la manière décrite à l'exemple 1, pour les étapes d'injection de vapeur, d'éjection et de formage et découpage.

On peut conserver les morceaux de protéines texturées en l'état pendant 12 mois à température ambiante.

On peut les réhydrater en les plongeant dans de l'eau bouillante pendant 5 min, de manière à obtenir des substituts alimentaires ayant une texture agréable.

## Revendications

1. Procédé de fabrication de protéines texturées, dans lequel on disperse dans de l'eau à 10-30° C une farine, une semoule et/ou des flocons de soya présentant une granulométrie de 40-400 µm et un agent acidifiant de manière à obtenir un mélange présentant une teneur en matière sèche de 33-40 %, un pH de 4,8-5,7 et une viscosité de 5000-12000 mPas, on soumet le mélange à un traitement par injection de vapeur durant 5-60 s à 120-150° C de manière à former des morceaux de protéines texturées, **caractérisé en ce qu'**on éjecte les morceaux par une buse d'éjection, sous forme d'un faisceau de morceaux distincts, on agglomère les morceaux éjectés par impact sur une surface déflectrice interceptant ledit faisceau de manière à former un boudin de morceaux agglomérés, on met en forme et/ou l'on découpe le boudin en fragments et l'on sèche les fragments.

2. Procédé selon la revendication 1, dans lequel on injecte du gaz non condensable dans le mélange avant le traitement par injection de vapeur.

3. Procédé selon la revendication 1, dans lequel on effectue le traitement par injection de vapeur dans un tube en "T" muni à chacune de ses extrémités d'au moins un diaphragme permettant respectivement la régulation de l'arrivée de vapeur, de l'arrivée du mélange et du déplacement du mélange dans lequel la vapeur a été injectée.

4. Procédé selon la revendication 1, dans lequel on contrôle le traitement par injection de vapeur par une soupape de contre-pression.

5. Procédé selon la revendication 1, dans lequel la buse d'éjection forme un angle de 115-125° avec la portion de surface déflectrice interceptant le faisceau de morceaux distincts.

6. Procédé selon la revendication 1, dans lequel on met en forme le boudin de morceaux agglomérés en le comprimant entre un rouleau et la bande de transport.

7. Procédé selon la revendication 1, dans lequel on découpe le boudin de morceaux agglomérés à l'aide d'un rouleau présentant des rayons parallèles et transversaux.

8. Procédé selon la revendication 1, dans lequel on découpe le boudin de morceaux agglomérés à l'aide d'une lame disposée perpendiculairement au dessus de la bande de transport et ayant un mouvement de haut en bas.

9. Procédé selon la revendication 1, dans lequel on additionne du sel et/ou un arôme et/ou un colorant au produit de départ dispersé dans de l'eau à 10-30° C.


**Patentansprüche**

1. Verfahren zur Herstellung von texturierten Proteinen, bei dem man Soyamehl, -grieß und/oder -flocken mit einer Korngröße von 40-400 μm und ein Säuerungsmittel in Wasser mit 10-30°C so dispergiert, dass man eine Mischung mit einem Trockenmassegehalt von 33-40%, einem pH-Wert von 4,8-5,7 und einer Viskosität von 5000-12000 mPas erhält, und die Mischung einer Behandlung durch Dampfeinspritzung bei 120-150°C während 5-60 s unterzieht, so dass Stücke von texturierten Proteinen gebildet werden, **dadurch gekennzeichnet, dass** man die Stücke durch eine Ausstoßdüse in Form eines Strahls von einzelnen Stücken ausstößt, die ausgestoßenen Stücke durch Auftreffen auf eine den Strahl schneidende Ablenkfläche agglomeriert, so dass ein Strang von agglomerierten Stücken gebildet wird, den Strang in Form bringt und/oder in Teile schneidet und die Teile trocknet.

2. Verfahren nach Anspruch 1, bei dem man in die Mischung vor der Behandlung durch Dampfeinspritzung ein nicht kondensierbares Gas einspritzt.

3. Verfahren nach Anspruch 1, bei dem man die Behandlung durch Dampfeinspritzung in einem T-Rohr vornimmt, das an jedem seiner Enden mit mindestens einer Blende versehen ist, die die Regulierung des Dampfzutritts, des Zutritts der Mischung bzw. der Bewegung der Mischung, in die Dampf eingespritzt wurde, gestattet.

4. Verfahren nach Anspruch 1, bei dem man die Behandlung durch Dampfeinspritzung mit einem Gegendruckventil steuert.

5. Verfahren nach Anspruch 1, bei dem die Ausstoßdüse mit dem Ablenkflächenbereich, der den Strahl von einzelnen Stücken schneidet, einen Winkel von 115-125° bildet.

6. Verfahren nach Anspruch 1, bei dem man den Strang aus agglomerierten Stücken in Form bringt, indem man ihn zwischen einer Walze und dem Förderband komprimiert.

7.  Verfahren nach Anspruch 1, bei dem man den Strang von agglomerierten Stücken mit Hilfe einer Walze schneidet, die parallele und quer verlaufende Rippen aufweist.

8.  Verfahren nach Anspruch 1, bei dem man den Strang von agglomerierten Stücken mit Hilfe einer senkrecht über dem Förderband angeordneten, sich von oben nach unten bewegenden Klinge schneidet.

9.  Verfahren nach Anspruch 1, bei dem man dem in Wasser mit 10-30°C dispergierten Ausgangsprodukt Salz und/ oder ein Aroma und/oder einen Farbstoff beigibt.

**Claims**

1.  Process for the production of textured proteins, wherein a flour, a semolina and/or flakes of soya having a grain size of 40-400 µm and an acidifying agent are dispersed in water at 10-30°C in such a way as to obtain a mixture having a dry content of 33-40%, a pH of 4.8-5.7 and a viscosity of 5000-12000 mPas, the mixture is subjected to a steam injection treatment for 5-60 s at 120-150°C in such a way as to form pieces of textured proteins, **characterised in that** the pieces are ejected by an ejector nozzle in the form of a bundle of separate pieces, the pieces ejected are agglomerated by impact on a deflecting surface intercepting the said bundle in such a way as to form a roll of agglomerated pieces, the roll is shaped and/or cut up into fragments and the fragments are dried.

2.  Process according to claim 1, wherein non condensable gas is injected into the mixture before the steam injection treatment.

3.  Process according to claim 1, wherein the steam injection treatment is performed in a "T" tube fitted at each end with at least one diaphragm enabling the arrival of steam, the arrival of the mixture and the displacement of the mixture into which the steam has been injected, respectively, to be regulated.

4.  Process according to claim 1, wherein the steam injection treatment is controlled by a back-pressure valve.

5.  Process according to claim 1, wherein the ejector nozzle forms an angle of 115-125° with the portion of deflecting surface intercepting the bundle of separate pieces.

6.  Process according to claim 1, wherein the roll of agglomerated pieces is shaped by compressing it between a roller and the conveyor belt.

7.  Process according to claim 1, wherein the roll of agglomerated pieces is cut up using a roller exhibiting parallel transverse projections.

8.  Process according to claim 1, wherein the roll of agglomerated pieces is cut up using a blade arranged perpendicularly above the conveyor belt and having an up and down motion.

9.  Process according to claim 1, wherein salt and/or a flavouring and/or a colouring agent are added to the starting product dispersed in water at 10-30°C.

FIG. 1

FIG. 2